# EUROPÄISCHE PATENTSCHRIFT

(11) **EP 0 944 486 B1**
(45) Veröffentlichungstag und Bekanntmachung des Hinweises auf die Patenterteilung: **25.09.2002**
(21) Anmeldenummer: 97952705.8
(22) Anmeldetag: 04.12.1997
(51) Int. Cl.: B60G 15/14, F16F 9/05, F16F 9/38

(54) **LUFTFEDERSYSTEM**
PNEUMATIC SUSPENSION SYSTEM
SYSTEME DE SUSPENSION PNEUMATIQUE

(30) Priorität: 17.12.1996 DE 19652351
(43) Veröffentlichungstag der Anmeldung: 29.09.1999
(73) Patentinhaber: PHOENIX AKTIENGESELLSCHAFT, 21079 Hamburg (DE)
(72) Erfinder: BERG, Jürgen, D-22885 Barsbüttel (DE)
(86) Internationale Anmeldenummer: DE9702833
(87) Internationale Veröffentlichungsnummer: WO98026947

(56) Entgegenhaltungen:
- EP-A- 0 225 271
- EP-A- 0 259 245
- EP-A- 0 262 079
- EP-A- 0 318 696
- DE-A- 3 631 610
- DE-C- 19 607 804
- GB-A- 830 696
- US-A- 4 332 397
- US-A- 4 555 096
- PATENT ABSTRACTS OF JAPAN vol. 014, no. 454 (M-1031), 28.September 1990 & JP 02 182512 A (ATSUGI UNISIA CORP), 17.Juli 1990,
- PATENT ABSTRACTS OF JAPAN vol. 006, no. 204 (M-164), 15.Oktober 1982 & JP 57 110517 A (FUJI JUKOGYO KK), 9.Juli 1982,
- PATENT ABSTRACTS OF JAPAN vol. 006, no. 228 (M-171), 13.November 1982 & JP 57 129942 A (SHIYOUWA SEISAKUSHO:KK), 12.August 1982,

## Beschreibung

Die Erfindung betrifft ein Luftfedersystem unter Ausbildung eines Mc-Pherson-Federbeines, umfassend
- einen Luftfedertopf mit integriertem Federbeinlager, das wiederum mit anderen Bauteilen, beispielsweise mit der Karosserie, verbunden ist;
- einen Luftfederbalg aus elastomerem Werkstoff, der insbesondere mit einem eingebetteten Festigkeitsträger versehen ist. wobei das obere Ende des Luftfederbalges mittels eines Klemmringes am Luftfedertopf befestigt ist, wobei ferner der Luftfederbalg eine schräg verlaufende Schlaufe aufweist, deren vom oberen und unteren Schlaufentiefpunkt umrahmte Wirkdurchmesser im wesentlichen senkrecht zur infolge der Radlast hervorgerufenen Kraftwirkungslinie verläuft;
- einen Luftfederkolben, an dem das untere Ende des Luftfederbalges mittels eines Klemmringes befestigt ist, wobei der Luftfederkolben eine Außenfläche aufweist, an der der Luftfederbalg beim Ein- und Ausfedern abrollen kann;
- eine Außenführung für den Luftfederbalg, die durch Preßpassung, Verrollen, Verkleben oder durch Verschrauben mit dem Luftfedertopf verbunden ist;
- eine Dämpfungseinrichtung, bestehend aus einem Behälterrohr, das mit dem Radträger verbunden ist, einer Kolbenstange sowie einer Kolbenstangenführung, wobei die Kolbenstange fest mit dem Federbeinlager verbunden ist und mittels der Kolbenstangenführung beim Ein- und Ausfedern gleitend in das Behälterrohr eintaucht, wobei ferner die Dämpfungsachse gewinkelt zur Kraftwirkungslinie verläuft, und zwar unter Bildung eines Schnittpunktes innerhalb der Kolbenstange, insbesondere im Bereich der Anbindung der Kolbenstange am Federbeinlager, dessen Lage sich beim Ein- und Ausfedern nur geringfügig verschiebt.
Ein derartiges Luftfedersystem ist in der deutschen Offenlegungsschrift 36 24 296 ausführlich beschrieben.

Ein Mc-Pherson-Federbein (auch Federdämpfer genannt) wird als Radführunaselement mit nur einem unteren Querlenker eingesetzt. Bedingt durch die vom Rad einwirkenden Kräfte wird in das Federbein ein Moment eingeleitet, welches die Federungseigenschaften durch erhöhte Reibung innerhalb der Dämpfungseinrichtung verschlechtert.

Um die Momentenreibung zu eliminieren, müssen die Wirkungslinien der Radaufstandskraft, der Lenkerkraft und der Federkraft durch einen Punkt (Momentennullpunkt) laufen. Durch Schrägstellen einer Stahlfeder wird die Reibung größtenteils minimiert. Beim Einsatz von Luftfedersystemen ist die Schrägstellung des Luftfederbalges aufgrund der Anbindungsteile (Luftfedertopf, Luftfederkolben, Außenführung etc.) jedoch nur bedingt möglich.

Die Aufgabe der Erfindung besteht nun darin, die Wirkfläche des Luftfederbalges (und damit die Schlaufe) so schräg zu stellen, daß die Reibungskräfte minimiert werden. Gleichzeitig soll ein hoher Fahrkomfort sichergestellt werden. Darüber hinaus soll der Luftfederbalg gegen Beschädigungen, beispielsweise durch Steinschlag oder Witterungseinflüsse, geschützt werden.

Gelöst wird diese Aufgabe gemäß Kennzeichen des Patentanspruches 1 durch folgende Bauteile:
- Der Luftfederkolben umgibt als getrenntes Bauteil die Dämpfungseinrichtung, wobei die Außenführung des Luftfederkolbens zylindrisch und konisch verlaufende Flächenteile aufweist, und zwar unter Bildung einer in Bezug auf die Dämpfungsachse nicht rotationssymmetrischen Abrollkontur, die dem Wirkdurchmesser der schräg verlaufenden Schlaufe des Luftfederbalges angepaßt ist, und zwar derart, daß der Wirkdurchmesser im wesentlichen parallel zu den Kanten der Abrollkontur verläuft.
- Die Außenführung umgibt die schräg verlaufende Schlaufe des Luftfederbalges stets vollständig beim Ein- und Ausfedern. Auf diese Weise ist der Luftfederbalg in jeder Position zwischen Außenführung und der Abrollkontur des Luftfederkolbens eingebettet.

Die Ausführung ermöglicht zudem den Einsatz eines Komfort optimierten Luftfederbalges mit axial zur Dämpfungsachse verlaufendem einlagigen Festigkeitsträger (DE-A- 36 43 073).
- Ein dünnwandiger Schutzfaltenbalg aus elastomerem Werkstoff oder TPE umgibt die Außenführung des Luftfederbalges wie auch den Luftfederkolben, wobei sein oberes Ende mit der Außenführung und/oder mit dem Luftfedertopf sowie sein unteres Ende mit dem Luftfederkolben oder mit dem Behälterrohr der Dämpfungseinrichtung verbunden ist.
- Zwischen dem Luftfederkolben und dem Behälterrohr der Dämpfungseinrichtung ist eine dichtende Kolbenaufnahme aus starrem Werkstoff angeordnet, und zwar in Form eines festen Verbundes.

Zweckmäßige Konstruktionsmerkmale des erfindungsgemäßen Luftfedersystems nach den Patentansprüchen 2 bis 11 sind:
- Die Abrollkontur weist eine Einschnürung auf, und zwar unter Vergrößerung des Abrollraumes zwischen der Außenführung und dem Luftfederkolben.
- Zwischen der Dämpfungseinrichtung und dem Luftfederkolben befindet sich ein topfförmiger Stützkörper, der insbesondere oberhalb des Behälterrohres angeordnet ist.
- Im Luftfederkolben oder im Luftfedertopf ist ein Restdruckventil angeordnet. Dabei ist es vorteilhaft, wenn das Restdruckventil innerhalb des Luftfederkolbens im Bereich der Kolbenaufnahme angeordnet ist.

Dieses Restdruckventil erleichtert die Montage am Fahrzeug und verhindert zudem eine Beschädigung bei Reparatur oder Ausfall des Drucksystems.
- Der Luftfederkolben besitzt eine Aufnahme für ein Stabilisatorgelenk, wobei die Aufnahme insbesondere im Bereich des Kolbenaufnahme angeordnet ist.
- Die Kanten der Abrollkontur sind abgerundet, wobei deren Radius vorzugsweise größer/gleich dem inneren Schlaufenradius ist.

Ein zweckmäßiges Verfahren zum Herstellen des erfindungsgemäßen Luftfedersystems besteht gemäß Patentanspruch 12 darin, den Luftfederbalg vor der Montage schräg abzuschneiden, wobei schließlich die schräge Schnittfläche am Luftfederkolben befestigt wird. Im Betriebszustand unter Druck bildet sich dann der Luftfederbalg mit schräger Schlaufe.

Die Erfindung wird nun anhand eines Ausführungsbeispiels unter Bezugnahme auf schematische Zeichnungen erläutert. Es zeigen:
- Fig. 1: eine Schnittdarstellung eines Luftfedersystems;
- Fig. 2: eine Vorderansicht der nicht rotationssymmetrischen Abrollkontur des Luftfederkolbens sowie eine Schnittdarstellung der anderen Bauteile;
- Fig. 3: einen Längsschnitt des Luftfederbalges vor der Montage.

In Verbindung mit diesen Figuren gilt folgende Bezugsziffernliste:
- 1: Luftfedersystem (im Betriebszustand unter Druck)
- 2: Luftfedertopf
- 3: Luftfederbalg (mit schräger Schlaufe im Betriebszustand unter Druck)
- 3.1: oberer Schlaufentiefpunkt
- 3.2: unterer Schlaufentiefpunkt
- 4: Luftfederkolben
- 5: nicht rotationssymmetrische Abrollkontur des Luftfederkolbens
- 5.1: Kante
- 5.2: Kante
- 5.3: Kante
- 5.4: Kante
- 5.5: Einschnürung
- 5.6: Abrollraum
- 6: Außenführung
- 7: Dämpfungseinrichtung
- 8: Behälterrohr mit integrierter Kolbenstangenführung
- 9: Kolbenstange
- 10: Schutzfaltenbalg
- 11: topfförmiger Stützkörper
- 12: Anschlagpuffer
- 13: Federbeinlager
- 14: Kugellager
- 15: Karosserie
- 16: Kolbenaufnahme
- 17: O-Ringe
- 18: Restdurckventil
- 19: Aufnahme für Stabilisatorgelenk
- 20: Klemmring
- 21: Klemmring
- 22: schräge Schnittfläche des Luftfederbalges
- X: Kraftwirkungslinie
- Y: Dämpfungsachse
- S: Schnittpunkt im Bereich der Anbindung der Kolbenstange am Federbeinlager
- D: Wirkdurchmesser der schrägen Schlaufe
- R: Schlaufenradius

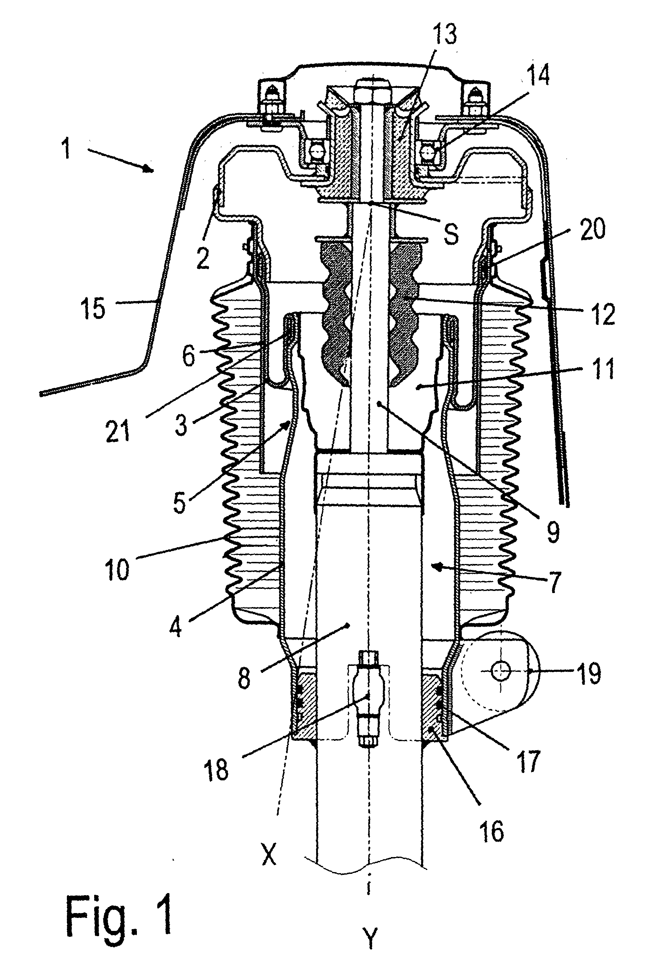

Nach Fig. 1 besitzt das Luftfedersystem **1** einen Luftfedertopf **2** mit integriertem Federbeinlager **13,** das ein Gummi-Metall-Lager ist und mit der Karosserie **15** verbunden ist. Außerdem ist zwischen dem Federbeinlager und der Karosserie ein Kugellager **14** angeordnet.

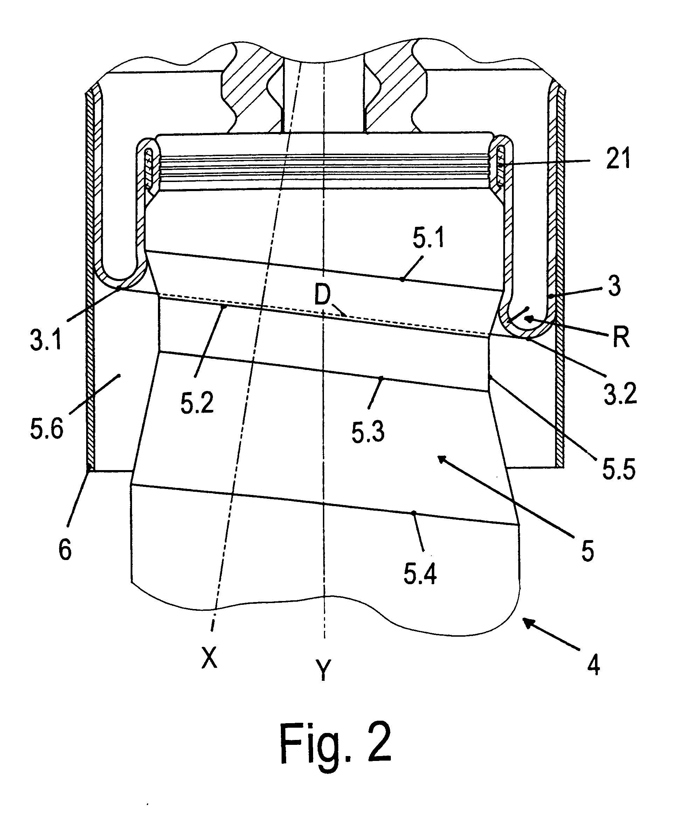

Die jeweiligen Enden des Luftfederbalges **3** aus elastomerem Werkstoff sind mittels Klemmringen **20** und **21** am Luftfedertopf **2** bzw. am Luftfederkolben **4** befestigt, wobei der Luftfederkolben eine nicht rotationssymmetrische Abrollkontur **5** aufweist, die in Verbindung mit der Fig. 2 noch näher erläutert wird.

Die zylindrische Außenführung **6** für den Luftfederbalg **3** ist mit dem Luftfedertopf **2** verbunden, wobei die Außenführung die schräg verlaufende Schlaufe des Luftfederbalges stets vollständig umgibt.

Die Dämpfungseinrichtung **7** besteht aus einem Behälterrohr **8** mit integrierter Kolbenstangenführung (hier nicht dargestellt) und einer Kolbenstange **9,** die wiederum fest mit dem Federbeinlager **13** verbunden ist und mittels der Kolbenstangenführung beim Ein- und Ausfedern gleitend in das Behälterrohr **8** eintaucht, wobei ferner die Dämpfungsachse **Y** gewinkelt zur Kraftwirkungslinie **X** verläuft, und zwar unter Bildung eines Schnittpunktes **S** im Bereich der Anbindung der Kolbenstange **9** am Federbeinlager **13.** Dieser Schnittpunkt verschiebt sich beim Ein- und Ausfedern nur geringfügig. Das Behälterrohr **8** ist mit dem Radträger (hier nicht dargestellt) verbunden.

Zwischen der Dämpfungseinrichtung **7** und dem Luftfederkolben **4** ist ein topfförmiger Stützkörper **11** angeordnet, und zwar oberhalb des Behälterrohres **8.**

Die Kolbenstange **9** weist ferner einen Anschlagpuffer **12** aus elastomerem Werkstoff auf, wobei der Anschlagpuffer in den topfförmigen Stützkörper **11** beim Einfedern abstützend eintaucht.

Ein dünnwandiger Schutzfaltenbalg **10** aus elastomerem Werkstoff oder TPE, dessen jeweilige Enden mit der Außenführung **6** bzw. dem Luftfederkolben **4** verbunden sind, schützt den Luftfederbalg **3** gegen Beschädigungen, beispielsweise durch Steinschlag oder Witterungseinflüsse.

Zwischen dem Luftfederkolben **4** und dem Behälterrohr **8** ist eine dichtende Kolbenaufnahme **16** aus starren Werkstoff (Metall oder entsprechender Kunststoff) vorhanden, und zwar unter Verwendung von O-Ringen **17.** Im Bereich dieser Kolbenaufnahme ist zudem innerhalb des Luftfederkolbens **4** ein Restdruckventil **18** sowie eine Aufnahme **19** für das Stabilisatorgelenk angeordnet.

Fig. 2 zeigt nun Details hinsichtlich der in Bezug auf die Dämpfungsachse **Y** nicht rotationssymmetrischen Abrollkontur **5** des Luftfederkolbens **4.** Das Besondere dieser Abrollkontur ist, daß diese zylindrisch und konisch verlaufende Flächenteile besitzt, und zwar unter Bildung von Kanten **5.1, 5.2, 5.3** und **5.4.** Die Asymmetrie dieser Abrollkanten wird dadurch verdeutlicht, daß die einzelnen Konturenelemente nicht spiegelsymmetrisch zu allen durch die Dämpfungsachse **Y** verlaufenden Spiegelebenen sind; und zwar ganz im Gegensatz zu den Abrollkanten gemäß DE-A-36 24 296, wo die Konturenelemente bei gleichem Bezugspunkt stets spiegelsymmetrisch, d.h. rotationssymmetrisch, sind.

Der Luftfederbalg **3** weist eine schräg verlaufende Schlaufe auf, deren vom oberen und unteren Schlaufentiefpunkt **3.1** bzw. **3.2** umrahmter Wirkdurchmesser **D** im wesentlichen senkrecht zur Kraftwirkungslinie **X** und im wesentlichen parallel zu den Kanten **5.1, 5.2, 5.3** und **5.4** der Abrollkontur **5** verläuft.

Die Kanten **5.1, 5.2, 5.3** und **5.4** der Abrollkontur **5** sind insbesondere abgerundet, wobei vorzugsweise deren Radius größer/gleich dem inneren Schlaufenradius **R** ist.

Die Abrollkontur **5** weist eine Einschnürung **5.5** auf, und zwar unter Vergrößerung des Abroliraumes **5.6** zwischen der Außenführung **6** und dem Luftfederkolben. Die Außenführung umgibt dabei die schräg verlaufende Schlaufe des Luftfederbalges **3** stets vollständig beim Ein- und Ausfedern. Auf diese Weise ist der Luftfederbalg in jeder Position zwischen Außenführung **6** und der Abrollkontur **5** des Luftfederkolbens eingebettet.

Der Bereich des Luftfederkolbens **4,** wo der Luftfederbalg **3** mittels des Klemmringes **21** befestigt ist, weist üblicherweise in Bezug auf alle durch die Dämpfungsachse **Y** verlaufenden Spiegelebenen eine spiegelsymmetrische Außenkontur auf.

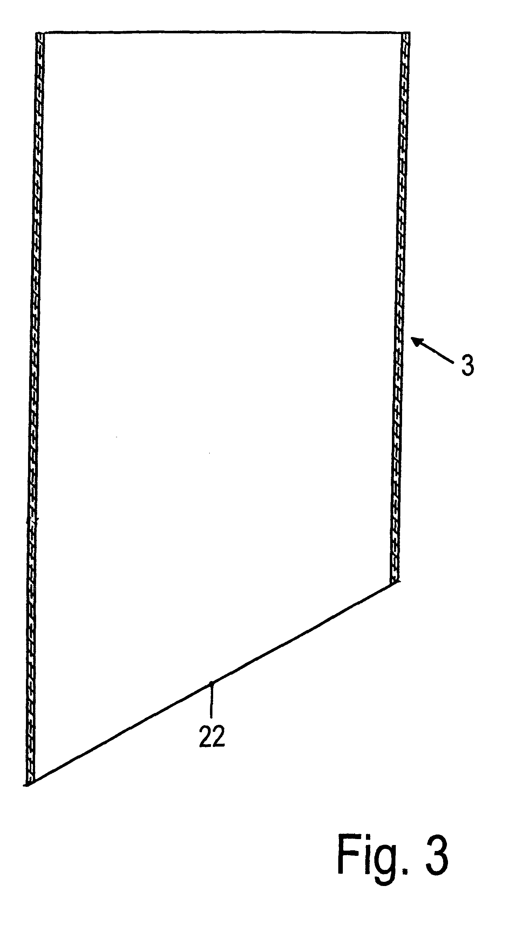

Fig. **3** zeigt nun den Luftfederbalg **3** vor der Montage, wobei dieser schräg abgeschnitten wird, und zwar unter Bildung der schrägen Schnittfläche **22.** Diese Schnittfläche wird am Luftfederkolben befestigt, wobei der Luftfederbalg **3** im Betriebszustand unter Druck eine schräge Schlaufe bildet (Fig. 1 und 2).

## Patentansprüche

1. Luftfedersystem (1) unter Ausbildung eines Mc-Pherson-Federbeines, umfassend
- einen Luftfedertopf (2) mit integriertem Federbeinlager (13), das wiederum mit anderen Bauteilen, beispielsweise mit der Karosserie (15), verbunden ist;
- einen Luftfederbalg (3) aus elastomerem Werkstoff, der insbesondere mit einem eingebetteten Festigkeitsträger versehen ist, wobei das obere Ende des Luftfederbalges mittels eines Klemmringes (20) am Luftfedertopf (2) befestigt ist, wobei ferner der Luftfederbalg eine schräg verlaufende Schlaufe aufweist, deren vom oberen und unteren Schlaufentiefpunkt (3.1, 3.2) umrahmte Wirkdurchmesser (D) im wesentlichen senkrecht zur infolge der Radlast hervorgerufenen Kraftwirkungslinie (X) verläuft;
- einen Luftfederkolben (4), an dem das untere Ende des Luftfederbalges (3) mittels eines Klemmringes befestigt ist, wobei der Luftfederkolben eine Außenfläche aufweist, an der der Luftfederbalg beim Ein- und Ausfedern abrollen kann;
- eine Außenführung (6) für den Luftfederbalg (3), die durch Preßpassung, Verrollen, Verkleben oder durch Verschrauben mit dem Luftfedertopf (2) verbunden ist;
- eine Dämpfungseinrichtung (7), bestehend aus einem Behälterrohr (8), das mit dem Radträger verbunden ist, einer Kolbenstange (9) sowie einer Kolbenstangenführung, wobei die Kolbenstange fest mit dem Federbeinlager (13) verbunden ist und mittels der Kolbenstangenführung beim Ein- und Ausfedern gleitend in das Behälterrohr eintaucht, wobei ferner die Dämpfungsachse (Y) gewinkelt zur Kraftwirkungslinie (X) verläuft, und zwar unter Bildung eines Schnittpunktes (S) innerhalb der Kolbenstange (9), insbesondere im Bereich der Anbindung der Kolbenstange am Federbeinlager (13), dessen Lage sich beim Ein- und Ausfedern nur geringfügig verschiebt;
**dadurch gekennzeichnet, daß**
- der Luftfederkolben (4) als getrenntes Bauteil die Dämpfungseinrichtung (7) umgibt, wobei die Außenfläche des Luftfederkolbens (4) zylindrisch und konisch verlaufende Flächenteile aufweist, und zwar unter Bildung einer in Bezug auf die Dämpfungsachse (Y) nicht rotationssymmetrischen Abrollkontur (5), die dem Wirkdurchmesser (D) der schräg verlaufenden Schlaufe des Luftfederbalges (3) angepaßt ist, und zwar derart, daß der Wirkdurchmesser (D) im wesentlichen parallel zu den Kanten (5.1, 5.2, 5.3, 5.4) der Abrollkontur (5) verläuft; daß
- die Außenführung (6) die schräg verlaufende Schlaufe des Luftfederbalges (3) beim Ein- und Ausfedern stets vollständig umgibt; daß
- ein dünnwandiger Schutzfaltenbalg (10) aus elastomerem Werkstoff oder TPE die Außenführung (6) des Luftfederbalges (3) wie auch den Luftfederkolben (4) umgibt, wobei sein oberes Ende mit der Außenführung und/oder mit dem Luftfedertopf (2) sowie sein unteres Ende mit dem Luftfederkolben (4) oder mit dem Behälterrohr (8) der Dämpfungseinrichtung (7) verbunden ist; und daß ferner
- zwischen dem Luftfederkolben (4) und dem Behälterrohr (8) der Dämpfungseinrichtung (7) eine dichtende Kolbenaufnahme (16) aus starrem Werkstoff angeordnet ist, und zwar in Form eines festen Verbundes.

2. Luftfedersystem nach Anspruch 1, **dadurch gekennzeichnet, daß** die Abrollkontur (5) eine Einschnürung (5.5) aufweist, und zwar unter Vergrößerung des Abrollraumes (5.6) zwischen der Außenführung (6) und dem Luftfederkolben (4).

3. Luftfedersystem nach Anspruch 1 oder 2, **dadurch gekennzeichnet, daß** sich zwischen der Dämpfungseinrichtung (7) und dem Luftfederkolben (4) ein topfförmiger Stützkörper (11) befindet, der insbesondere oberhalb des Behälterrohres (8) angeordnet ist.

4. Luftfedersystem nach einem der Ansprüche 1 bis 3, **dadurch gekennzeichnet, daß** die Kolbenstange (9) der Dämpfungseinrichtung (7) einen Anschlagpuffer (12) aus elastomerem Werkstoff aufweist.

5. Luftfedersystem nach Anspruch 3 und 4, **dadurch gekennzeichnet, daß** der Anschlagpuffer (12) in den topfförmigen Stützkörper (11) beim Einfedern abstützend eintaucht.

6. Luftfedersystem nach einem der Ansprüche 1 bis 5, **dadurch gekennzeichnet, daß** im Luftfederkolben (4) oder im Luftfedertopf (2) ein Restdruckventil (18) angeordnet ist.

7. Luftfedersystem nach Anspruch 6, **dadurch gekennzeichnet, daß** das Restdruckventil (18) innerhalb des Luftfederkolbens (4) im Bereich der Kolbenaufnahme (16) angeordnet ist.

8. Luftfedersystem nach einem der Ansprüche 1 bis 7, **dadurch gekennzeichnet, daß** der Luftfederkolben (4) eine Aufnahme (19) für ein Stabilisatorgelenk besitzt.

9. Luftfedersystem nach Anspruch 8, **dadurch gekennzeichnet, daß** die Aufnahme (19) für das Stabilisatorgelenk im Bereich der Kolbenaufnahme (16) angeordnet ist.

10. Luftfedersystem nach einem der Ansprüche 1 bis 9, **dadurch gekennzeichnet, daß** die Kanten (5.1, 5.2, 5.3, 5.4) der Abrollkontur (5) abgerundet sind.

11. Luftfedersystem nach Anspruch 10, **dadurch gekennzeichnet, daß** der Radius der abgerundeten Kanten (5.1, 5.2, 5.3, 5.4) der Abrollkontur (5) größer/gleich dem inneren Schlaufenradius (R) ist.

12. Verfahren zum Herstellen eines Luftfedersystems unter Ausbildung eines Mc-Pherson-Federbeins mit den konstruktiven Merkmalen nach einem der Ansprüche 1 bis 11, **dadurch gekennzeichnet, daß** der Luftfederbalg (3) vor der Montage schräg abgeschnitten wird, wobei dann die schräge Schnittfläche (22) am Luftfederkolben (4) befestigt wird.

## Claims

1. Air spring system (1) forming a McPherson strut, comprising
- an air spring pot (2) with an integral spring strut mount (13) which in turn is connected to other components, for example to the body (15);
- an air spring bellows (3) made of elastomer material which is provided in particular with an embedded strength member, the upper end of the air spring bellows being fastened to the air spring pot (2) by means of a clamping ring (20), further the air spring bellows exhibiting a loop which runs obliquely and the effective diameter (D) of which framed by the upper and lower loop bottom points (3.1, 3.2) runs essentially perpendicular to the line of action of the force (X) produced due to the wheel load;
- an air spring piston (4) to which the lower end of the air spring bellows (3) is fastened by means of a clamping ring, the air spring piston exhibiting an external surface on which the air spring bellows can roll during compression and extension of the spring;
- an external guide (6) for the air spring bellows (3) which is connected to the air spring pot (2) by a pressfit, rolling, gluing or by screwing;
- a damping device (7) consisting of a reservoir tube (8) which is connected to the wheel carrier, of a piston rod (9) and of a piston rod guide, the piston rod being connected firmly to the spring strut mount (13) and engaging slidingly in the reservoir tube by means of the piston rod guide during compression and extension of the spring, further the damping axis (Y) running at an angle to the line of action of the force (X), forming a point of intersection (S) inside the piston rod (9), in particular in the area of the attachment of the piston rod to the spring strut mount (13), the location of which only moves a tiny amount during compression and extension of the spring;
**characterised in that**
- the air spring piston (4) surrounds the damping device (7) as a separate component, the external surface of the air spring piston (4) exhibiting surface parts running cylindrically and conically, forming a rolling contour (5) which is not rotationally symmetrical in relation to the damping axis (Y) and is matched to the effective diameter (D) of the oblique loop of the air spring bellows (3) such that the effective diameter (D) runs essentially parallel to the edges (5.1, 5.2, 5.3, 5.4) of the rolling contour (5); **in that**
- the external guide (6) always completely surrounds the oblique loop of the air spring bellows (3) during compression and extension of the spring; **in that**
- a thin-walled protective gaiter (10) made of elastomer material or TPE surrounds the external guide (6) of the air spring bellows (3) and the air spring piston (4), its upper end being connected to the external guide and/or to the air spring pot (2) and its lower end being connected to the air spring piston (4) or to the reservoir tube (8) of the damping device (7); and **in that** further
- a sealing piston collar (16) made of rigid material is arranged between the air spring piston (4) and the reservoir tube (8) of the damping device (7), forming a solid combination.

2. Air spring system according to claim 1,
**characterised in that** the rolling contour (5) exhibits a neck (5.5), enlarging the rolling space (5.6) between the external guide (6) and the air spring piston (4).

3. Air spring system according to claim 1 or 2,
**characterised in that** located between the damping device (7) and the air spring piston (4) there is a pot-shaped support (11) which in particular is arranged above the reservoir tube (8).

4. Air spring system according to one of claims 1 to 3,
**characterised in that** the piston rod (9) of the damping device (7) exhibits a stop buffer (12) made of elastomer material.

5. Air spring system according to claim 3 and 4,
**characterised in that** the stop buffer (12) engages supportingly in the pot-shaped support (11) during compression of the spring.

6. Air spring system according to one of claims 1 to 5,
**characterised in that** a residual pressure valve (18) is arranged in the air spring piston (4) or in the air spring pot (2).

7. Air spring system according to claim 6,
**characterised in that** the residual pressure valve (18) is arranged inside the air spring piston (4) in the area of the piston collar (16).

8. Air spring system according to one of claims 1 to 7,
**characterised in that** the air spring piston (4) has a mounting (19) for a stabiliser blade.

9. Air spring system according to claim 8,
**characterised in that** the mounting (19) for the stabiliser blade is arranged in the area of the piston collar (16).

10. Air spring system according to one of claims 1 to 9,
**characterised in that** the edges (5.1, 5.2, 5.3, 5.4) of the rolling contour (5) are rounded.

11. Air spring system according to claim 10,
**characterised in that** the radius of the rounded edges (5.1, 5.2, 5.3, 5.4) of the rolling contour (5) is greater than or equal to the internal loop radius (R).

12. Method for production of an air spring system forming a McPherson strut with the design features according to one of claims 1 to 11, **characterised in that** the air spring bellows (3) is cut at an oblique angle before assembly and then the oblique cut surface (22) is fastened to the air spring piston (4).

## Revendications

1. Système de suspension pneumatique (1) avec formation d'une jambe de force de suspension Mc Pherson, comprenant :
- un pot à ressort pneumatique (2), comportant un palier de jambe de suspension élastique (13) intégré, relié à son tour à d'autres composants par exemple à la carrosserie (15);
- un soufflet de ressort pneumatique (3) en matériau élastomère, muni en particulier d'un support résistanT noyé, l'extrémité supérieure du soufflet de ressort pneumatique étant fixée sur le pot de ressort pneumatique (2) à l'aide d'un anneau de serrage (20), le soufflet de ressort pneumatique présentant, en outre, une boucle s'étendant obliquement, dont le diamètre actif (D), encadré par un point bas de boucle supérieur et inférieur (3.1, 3.2), s'étend sensiblement perpendiculairement par rapport à la ligne d'action de force (X) provoquée par suite de la charge exercée sur la roue;
- un piston de ressort pneumatique (4), auquel l'extrémité inférieure du soufflet de ressort pneumatique (3) est fixée à l'aide d'un anneau de serrage, le piston de ressort pneumatique présentant une face extérieure sur laquelle le soufflet de ressort pneumatique peut rouler lors du débattement en compression et déploiement de la suspension;
- un guidage extérieur (6) pour le soufflet de ressort pneumatique (3), relié au pot de ressort pneumatique (2) par ajustage serré, dudgeonnage à la molette, collage ou vissage;
- un dispositif d'amortissement (7) formé d'un tube formant un réservoir (8) relié au support de roue, d'une tige de piston (9), ainsi que d'un guidage de tige de piston, la tige de piston étant reliée rigidement au palier de jambe de suspension (13) et pénétrant avec coulissement dans le tube formant réservoir, au moyen du guidage de tige de piston, lors des débattements en compression et en déploiement de la suspension, l'axe d'amortissement (Y) étant en outre incliné d'un certain angle par rapport à la ligne d'action de force (X), et précisément en formant un point d'intersection (S) situé à l'intérieur de la tige de piston (9), en particulier dans la zone de la liaison de la tige de piston sur le palier de jambe de suspension (13), dont la position n'est que légèrement décalée des débattements en compression et en déploiement de la suspension;
**caractérisé en ce que**
- le piston de ressort pneumatique (4) entoure, en tant que composant séparé, le dispositif d'amortissement (7), la face extérieure du piston de ressort pneumatique (4) étant cylindrique et présentant des parties de surface d'allure conique, et précisément en formant un contour pour déroulement (5) qui ne répond pas à une symétrie de rotation par rapport à l'axe d'amortissement (Y), contour adapté au diamètre actif (D) de la boucle, s'étendant obliquement, du soufflet de ressort pneumatique (3), et précisément de manière que le diamètre actif (D) s'étende sensiblement parallèlement aux arêtes (5.1, 5.2, 5.3, 5.4) du contour pour déroulement; **en ce que**
- le guidage extérieur (6) entoure de façon toujours complète la boucle à allure oblique du soufflet de ressort pneumatique (3) lors des débattements en compression et en déploiement ; **en ce qu'**
- un soufflet ondulé de protection (10) à paroi mince, en matériau élastomère ou en TPE, entoure le guidage extérieur (6) du soufflet de ressort pneumatique (3), ainsi qu'également le piston de ressort pneumatique (4), son l'extrémité supérieure étant reliée au guidage extérieur et/ou au pot de ressort pneumatique (2), et son extrémité inférieure étant reliée au piston de ressort pneumatique (4) ou au tube formant récipient (8) du dispositif d'amortissement (7); et **en ce que**, en outre
- entre le piston de ressort pneumatique (4) et le tube formant récipient (8) du dispositif d'amortissement (7) est disposé un support formant piston (16) à fonction d'étanchéité, réalisé en matériau rigide, précisément sous la forme d'un composite ferme.

2. Système de suspension pneumatique selon la revendication 1, **caractérisé en ce que** le contour à déroulement (5) présente un étranglement (5.5) et, en particulier, avec grossissement de l'espace de déroulement (5.6) entre le guidage extérieur (6) et le piston de ressort pneumatique (4).

3. Système de suspension pneumatique selon la revendication 1 ou 2, **caractérisé en ce qu'**entre le dispositif d'amortissement (7) et le piston à ressort pneumatique (4) se trouve un corps d'appui (11) en forme de pot, disposé en particulier au-dessus du tube formant récipient (8).

4. Système de suspension pneumatique selon l'une des revendications 1 à 3, **caractérisé en ce que** la tige de piston (9) du dispositif d'amortissement (7) présente un tampon de butée (12) en matériau élastomère.

5. Système de suspension pneumatique selon les revendications 3 et 4, **caractérisé en ce que** le tampon de butée (12) pénètre, avec un effet d'appui, dans le corps d'appui (11) en forme de pot, lors du débattement de compression de la suspension.

6. Système de suspension pneumatique selon l'une des revendications 1 à 5, caractérisé en ce un clapet de pression résiduel (18) est déposé dans le piston de ressort pneumatique (4) ou dans le pot à ressort pneumatique (2).

7. Système de suspension pneumatique selon la revendication 6, **caractérisé en ce que** le clapet à pression résiduelle (18) est déposé à l'intérieur du piston à ressort pneumatique (4), dans la zone du support formant piston (16).

8. Système de suspension pneumatique selon l'une des revendications 1 à 7, **caractérisé en ce que** le piston de ressort pneumatique (4) comporte un support (19) pour une articulation de stabilisateur.

9. Système de suspension pneumatique selon la revendication 8, **caractérisée en ce que** le support (19) de l'articulation de stabilisateur est disposé dans la zone du support formant piston (16).

10. Système de suspension pneumatique selon l'une des revendications 1 à 9, **caractérisé en ce que** les arêtes (5.1, 5.2, 5.3, 5.4) du contour pour déroulement (5) sont arrondies.

11. Système de suspension pneumatique selon la revendication 10, **caractérisé en ce que** le rayon des arêtes (5.1, 5.2, 5.3, 5.4) arrondies du contour pour déroulement (5) est supérieur/égal au rayon intérieur (R) de la boucle.

12. Procédé de fabrication d'un système de suspension pneumatique, avec réalisation d'une jambe de force de suspension Mc Pherson, présentant les caractéristiques de construction selon l'une des revendications 1 à 11, **caractérisé en ce que** le soufflet de ressort pneumatique (3) est découpé obliquement avant le montage, la surface de coupe (2) oblique étant ensuite fixée sur le piston de ressort pneumatique (4)
